# EUROPEAN PATENT SPECIFICATION

(11) **EP 3 087 225 B1**
(45) Date of publication and mention of the grant of the patent: **09.02.2022**
(21) Application number: 14821649.2
(22) Date of filing: 22.12.2014
(51) Int. Cl.: E02F 9/26, G01V 1/38, G01S 15/02

(54) **DEVICE AND METHOD FOR OBTAINING INFORMATION ABOUT THE GROUND OF AN AREA FOR DREDGING**
VORRICHTUNG UND VERFAHREN ZUR GEWINNUNG VON INFORMATIONEN ÜBER DEN BODEN EINES GEBIETS ZUM BAGGERN
DISPOSITIF ET PROCÉDÉ POUR OBTENIR DES INFORMATIONS SUR LE SOL D'UNE ZONE POUR LE DRAGAGE.

(30) Priority: 23.12.2013 BE 201300817
(43) Date of publication of application: 02.11.2016
(73) Proprietor: Baggerwerken Decloedt en Zoon, 8400 Oostende (BE)
(72) Inventor: VERSTRAELEN, Luk, B-3080 Vossem (BE); BOEL, Simon, Lodewijk, Maria, René, B-9120 Melsele (Beveren-Waas) (BE)
(74) Representative: Brouwer, Hendrik Rogier
(86) International application number: PCT/EP2014/079062
(87) International publication number: WO 2015/097178

(56) References cited:
- DE-B- 1 097 847
- US-A- 4 406 242
- US-A1- 2005 180 260

## Description

Prior to dredging of an area it is appropriate to collect information relating to the condition and layer structure of the ground for dredging. It is thus important for instance to properly map hard ground portions such as rocks in order to prevent damage to components of the dredging vessel. A good knowledge of the softer parts in the ground will on the other hand help in achieving higher dredging production there. Using the obtained information it can then be determined which type of dredging vessel should be employed, what is the optimal route, what production is attainable and whether problems are to be expected during dredging. This list is of course not limitative.

A known device for obtaining information about the ground of an area for dredging comprises a vessel provided with a geophysical source, such as for instance a seismic source. The geophysical source is embodied to generate a signal under water directed toward the bottom, such as for instance a seismic wave. Further mounted on the vessel is a carrier for a series of geophysical receivers which are each able to measure the seismic signal returning via the bottom. The known carrier comprises a tow cable which is provided with receivers and attached to the stern of the vessel and is dragged through the water during operation. In order to enable use of the longest possible tow cable, so that a large area can be covered, the tow cable extends behind the vessel here in the direction of navigation. Information about the stratification of the bottom and the hardness of bottom layers can for instance be obtained from the reflected signal received by the receivers.

The known device has the drawback that the ground information obtained therewith is not fully comprehensive. The surface area of an area for dredging can typically amount to several square kilometres. In the usual geophysical measuring techniques frequently used in this type of situation the cable with receivers is dragged through the area. The actual measurement takes place here in the area between the source on the vessel and the sensors on the cable. Because the cable is dragged along and thus follows the navigation route of the vessel, information is therefore only collected along the navigation lines of the vessel. Depending on the situation, these lines are typically 100 to 500 m apart. It is however not unusual for the surface area of hard ground portions such as rock zones to amount for instance to only several square metres. It has been found that such hard ground portions often remain undiscovered with the known device because they were located between two measuring lines. If they are unexpectedly struck by a component of a dredging vessel during dredging, damage may occur or operations have to be temporarily interrupted. Because the measuring lines are relatively narrow it is not possible to examine the whole area with the known device. This would require an excessive number of lines, all immediately adjacently of each other.

DE 10 97 847 B (SIEGFRIED FAHRENTHOLZ DR) 19 January 1961 (1961-01-19) discloses an arrangement for obtaining information on the soil of an area to be dredged.

The invention has for its object, among others, to provide a device and method for obtaining information about the ground of an area for dredging which at least partially obviates the above stated drawbacks.

### SUMMARY OF THE INVENTION

The invention provides for this purpose a device for obtaining information about the ground of an area for dredging as defined by claim 1. Because the measuring device now runs transversely of the direction of navigation, the measurement no longer takes place in thin lines but in wide bands. This allows a complete examination of the area. It has been found that the device according to the invention has a high hit rate and that the chance of ground portions not being adequately examined is relatively low. A more complete survey of the bottom for dredging is hereby obtained, so that the risk of damage or other unforeseen circumstances is reduced compared to the method applied with the known device.

The elongate carrier can be embodied in any conceivable manner. It is thus possible for instance to provide a carrier in the form of a cable tensioned between two boats. A practical embodiment comprises a device wherein the carrier comprises an elongate support structure with bending stiffness and with a longitudinal direction extending transversely of the direction of navigation of the vessel.

Another embodiment according to the invention comprises a device as described above, wherein the carrier carries the source.

Yet another embodiment according to the invention comprises a device as described above, wherein the receivers lie in a line extending parallel to the longitudinal direction of the carrier.

Another embodiment according to the invention comprises a device as described above, wherein the carrier is provided with a depth gauge, preferably a pressure gauge. Another embodiment according to the invention comprises a device as described above, wherein the carrier is provided with damping means embodied to reduce the propagation of the signal generated by the source through the carrier.

Another embodiment according to the invention comprises a device as described above, wherein the damping means are embodied such that the propagation velocity of the wave generated by the source through the carrier is lower than the propagation velocity of the wave generated by the source through the underwater bottom.

Yet another embodiment according to the invention comprises a device as described above, wherein the damping means comprise rubber elements.

Another embodiment according to the invention comprises a device as described above, wherein the damping means are placed between the carrier and receivers mounted on the carrier.

According to the invention, the apparatus comprises a device as described above, wherein the carrier comprises a support structure, and this support structure comprises a lattice of mutually connected lattice elements.

According to the invention, the apparatus further comprises a device as described above, wherein the lattice elements are provided with openings accessible to water.

Another embodiment according to the invention comprises a device as described above, wherein the source and/or the receivers and/or signal cabling therefor is accommodated in the carrier.

Another embodiment according to the invention comprises a device as described above, wherein the source and/or the receivers and/or signal cabling is mounted in rigid manner under the carrier.

Another embodiment according to the invention comprises a device as described above, wherein the carrier comprises a support structure which is embodied for rigid mounting on the vessel.

Another embodiment according to the invention comprises a device as described above, wherein the carrier is embodied for mounting on the vessel via a hinged connection or a damping suspension.

Another embodiment according to the invention comprises a device as described above, wherein the carrier comprises a support structure which is embodied to be lowered from the vessel with the longitudinal direction oriented substantially horizontally.

Another embodiment according to the invention comprises a device as described above, wherein the source comprises a seismic source and the receivers comprise seismic receivers. The seismic source can for instance comprise a so-called airgun, sparker, boomer or other usual seismic source. The seismic source sends a seismic wave into the water at regular intervals, for instance every 10 seconds. The seismic wave reaches the bottom and, shortly afterward, also underlying bottom layers. The waves reflected from the water bottom and underlying bottom layers are received by the receivers provided on the carrier. A determined seismic receiver measures the time at which a wave emitted by the source reaches said receiver. Knowledge of the distance between source and said receiver makes it possible to calculate a seismic velocity through the bottom layers. This produces information relating to the depth of the bottom layers and their properties.

Another embodiment according to the invention comprises a device as described above, wherein the receivers comprise a hydrophone. A hydrophone converts sound to electricity and is suitable for use under water or other liquids. They can be applied in the infrasonic, audio or ultrasonic frequency range.

Another embodiment according to the invention comprises a device as described above, wherein the source comprises an electromagnetic source and the receivers comprise electromagnetic receivers. The electromagnetic source generates an electromagnetic field which induces electric currents in the ground. The strength of these induced currents depends on the electrical conductivity of the ground. The receivers measure the magnetic field generated by these induced currents in the ground. The electrical resistance through the bottom layers can hereby be calculated. This produces information relating to the depth of the bottom layers and their properties.

Another embodiment according to the invention comprises a device as described above, wherein the source comprises an electrical source and the receivers comprise electrical receivers. Knowledge of the distance between source and said receiver and the generated electrical voltage makes it possible to calculate the electrical resistance through the bottom layers. This produces information relating to the depth of the bottom layers and their properties.

The invention likewise relates to a method for obtaining information about the ground of an area for dredging, wherein a device according to the invention is provided, the carrier mounted on the vessel and provided with the series of receivers is immersed in water, the vessel is moved forward, wherein the longitudinal direction of the carrier extends transversely of the direction of navigation of the vessel, the source generates signals and the receivers measure response signals returning via the underwater bottom.

Another embodiment according to the invention comprises a method as described above, wherein the carrier comprises a support structure which is lowered from the vessel with the longitudinal direction thereof oriented substantially horizontally.

Another embodiment according to the invention comprises a method as described above, wherein the source generates a seismic wave and the receivers measure the seismic wave returning via the underwater bottom.

Another embodiment according to the invention comprises a method as described above, wherein the source generates an electromagnetic wave and the receivers measure electromagnetic waves returning via the underwater bottom.

It will be apparent that the ground information obtained with the device and method can if desired be supplemented with geological measurement data obtained from drillings, measurements in drilled holes, vibrocore drillings, piston sampling, soundings, flush samples and the like.

### DETAILED DESCRIPTION OF THE INVENTION

The invention will now be further elucidated with reference to the following figures, without otherwise being limited thereto. In the figures:
Fig. 1 is a side view of an embodiment of the device according to the invention;
Fig. 2 is a top view of the embodiment of the device according to the invention shown in figure 1;
Fig. 3 is a front view of an embodiment of a carrier immersible in water for a series of receivers according to the invention;
Fig. 4A is a side view of a component of the embodiment of a carrier according to the invention shown in figure 3;
Fig. 4B is a front view of the component of the carrier according to the invention shown in figure 4A;
Fig. 5 is a perspective view of a component of the embodiment of a carrier according to the invention shown in figure 3; and finally
Fig. 6A and 6B are top views of two other embodiments of the device according to the invention.

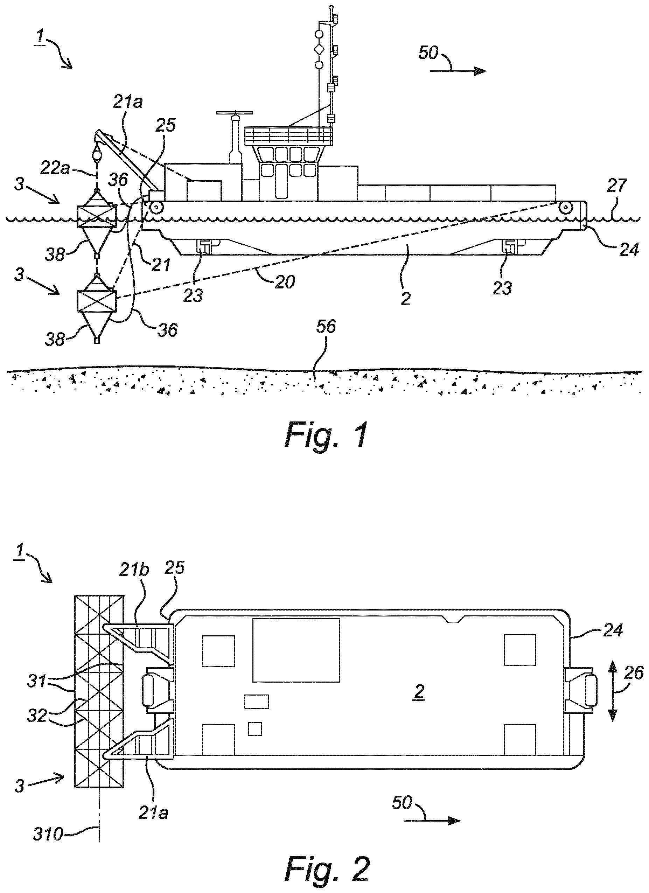

Referring to figures 1, 2 and 3, an embodiment is shown of a device 1 for obtaining information relating to an underwater bottom 56. The device comprises a vessel 2 and a carrier 3 coupled thereto for a number of receivers in the form of hydrophones 34. Carrier 3 can be lowered below water level 27 and if desired raised above water level 27 by means of derricks (21a, 21b) connected to the deck of vessel 2 and hoisting cables (22a, 22b) co-acting therewith. Carrier 3 is shown at two different height positions in figure 1 in order to illustrate this. In the shown embodiment carrier 3 is connected via a hinged connection or a damping suspension to vessel 2. It is however also possible for carrier 3 to be attached by means of a rigid connection to vessel 2.

The hoisting cables (22a, 22b) can if desired be lengthened or shortened independently of each other in order to place or hold carrier 3 in a substantially horizontal position. The position of the carrier is controlled using tow cables (20, 21), which are connected on one side to carrier 3 and on the other side to vessel 2 at the position of respectively bow 24 and stern 25, although tow cables (20, 21) are not essential. The carrier is dragged along above the surface of underwater bottom 56 in a dragging direction 50. Carrier 3 can for instance be held here at a height of 25-150 cm above the bottom surface, although any desired height is possible. The dragging force is provided by vessel 2, which can for this purpose be provided at each corner with a propeller 23 for the purpose of precise steering

According to an embodiment of the invention, carrier 3 comprises an elongate support structure with bending stiffness and with a longitudinal direction 310 extending transversely of the towing direction of vessel 2. Support structure with bending stiffness is understood in the context of this application to mean a support structure with a bending stiffness which is greater than the bending stiffness of a loose-hanging cable as applied in the known method, and preferably at least five, more preferably at least ten times greater.

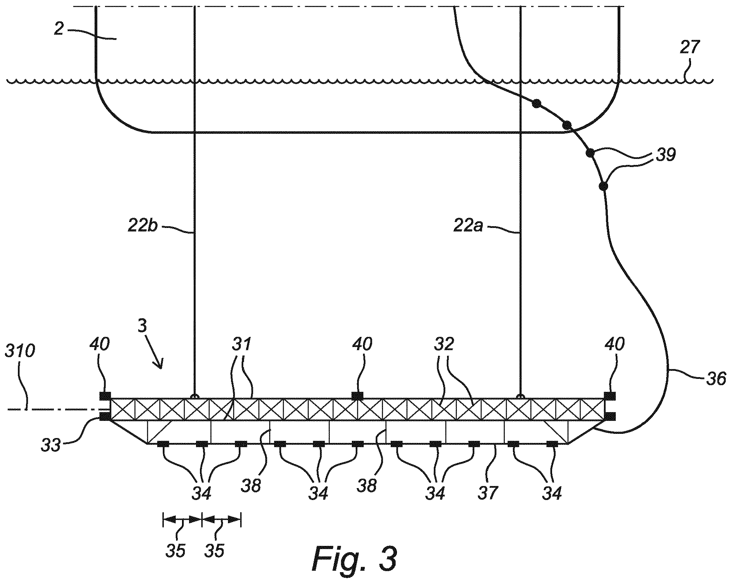

The desired bending stiffness can for instance be achieved with an embodiment of carrier 3 as shown in figure 3 in which it comprises a support structure in the form of a lattice of mutually connected lattice elements, more particularly mutually coupled lattice elements 31 running in the longitudinal direction and lattice elements 32 running transversely or crosswise and serving as spacers for elements 31. In order to make the support structure as light as possible and to allow it to sink easily the lattice elements (31, 32) are provided if desired with openings accessible to water, which are not visible in the figures.

At least one geophysical source 33 is arranged on carrier 3 at an outer end thereof. Such a source can also be provided separately of carrier 3, for instance attached to vessel 2, or to a cable or other support structure provided for the purpose. Carrier 3 is further provided with a series of geophysical receivers 34 which in the embodiment shown in figure 3 lie in a line extending parallel to the longitudinal direction 310 of the carrier or support structure 3. Receivers 34 are moreover arranged at fixed positions relative to each other, wherein the mutual spacing 35 is known. The spacing 35 between two successive receivers 34 can be equal for each pair of receivers, but can also differ. Because geophysical source 33 is likewise located at a fixed position on the carrier or support structure 3, each receiver 34 is located at a known distance from source 33.

Geophysical source 33 and receivers 34 are connected electrically to each other by means of signal cabling 36 which leads to signal processing equipment (not shown) such as computers and the like present on vessel 2. Transmission of the signals can take place in both analog and digital manner. Signal cabling 36 can comprise conventional electrical cabling and/or optical cabling. It is also possible to use telemetry as an alternative, for instance analog radio, digital radio, infrared, ultrasound.

Geophysical source 33, geophysical receivers 34 and signal cabling 36 can be accommodated (signal cabling 36 partially) in the lattice of support structure 3 in order to protect them against impact loads and the like. In the embodiment shown in figure 3 however, receivers 34 are mutually connected by means of a tensioning cable 37 which is held some distance from the lower lattice elements 31 by means of spacers 38. Receivers 34 are in this way protected to a certain extent, wherein they are at the same time readily accessible to the signal received from the bottom. The part of signal cabling 36 which extends from support structure 3 to vessel 2 can be provided if desired with floating bodies 39.

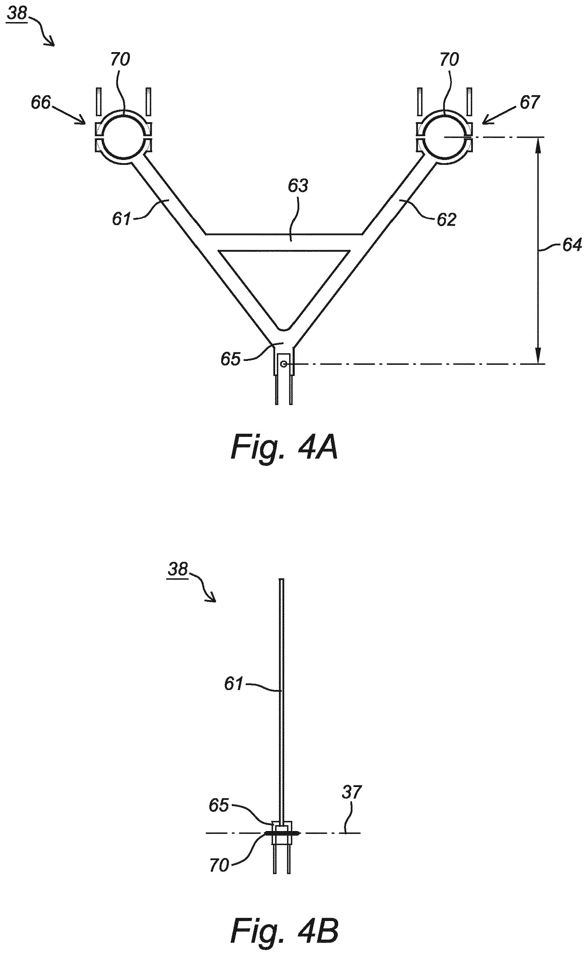

According to the embodiment shown in figures 4A and 4B, spacers 38 comprise a triangular assembly of for instance aluminium or plastic tubes (61, 62) which are coupled to a transverse tube 63 in order to obtain torsional stiffness. Tubes (61, 62) come together on the underside (which is directed toward underwater bottom 56) of spacer 38 in a node 65 provided with fastening means such as bolt holes for a receiver 34. Arranged on the other side of tubes (61, 62) are eyes (66, 67) which can be opened and arranged round a lattice element 31 of support structure 3. Node 65 and eyes (66, 67) are provided in the shown embodiment with damping rubber parts 70 which protect tensioning cable 37 and receivers 34 from vibrations which could reach receivers 34 from source 33 via lattice elements 31 and disturb the measurements. The height 64 of spacers 38 can be chosen within broad limits, wherein an increasing height 64 increases the risk of damage but improves the measurement. A suitable height lies between 10 and 100 cm, more preferably between 20 and 80 cm, and most preferably between 30 and 50 cm.

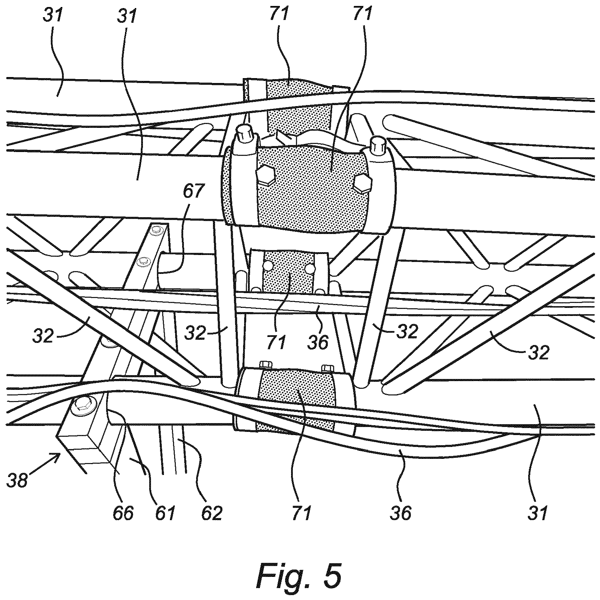

As shown in figure 5, support structure 3 is preferably provided with damping means 71 which are embodied to reduce disturbances of the signal generated by source 33 by lattice elements (31, 32) of support structure 3. In the case of seismic signals this takes place by ensuring that the propagation velocity of the wave generated by source 33 through support structure 3 is lower than the propagation velocity of the wave generated by source 33 through underwater bottom 56. In the case of electromagnetic signals this takes place by ensuring that support structure 3 does not influence the magnetic field generated by source 33, or does so as little as possible. Such embodiments reduce the risk of disturbance of the measurements performed by receivers 34.

As shown, damping means 71 can for instance comprise rubber elements which are placed between connected lattice elements 31 of support structure 3 and therefore between source 33 and receivers 34 mounted on support structure 3. Damping material, for instance neoprene, can be placed inside the elements between the tubes of the support structure.

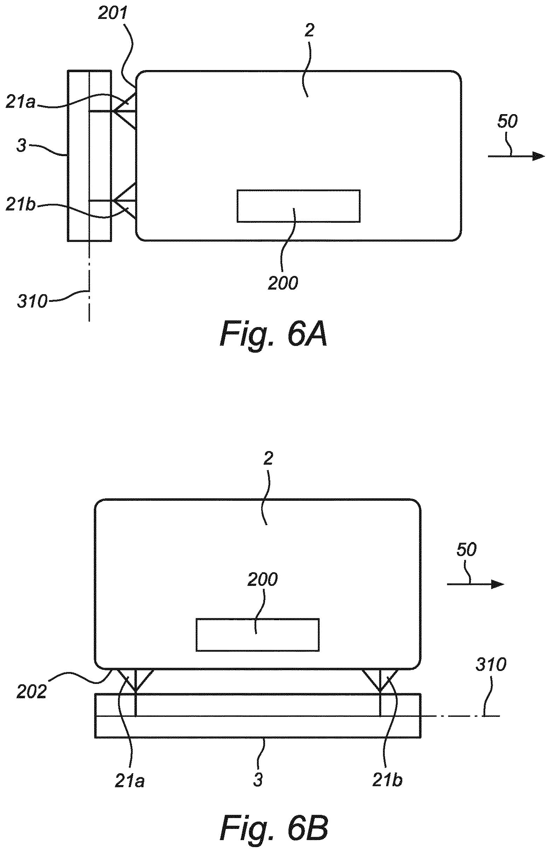

Referring to figure 6A, an alternative embodiment of the device according to the invention is shown which comprises a vessel 2 in the form of a multicat or pontoon which is provided with a bridge 200 and on which a carrier 3 for a number of receivers 34 is mounted along a short side 201. Because the direction of navigation 50 extends transversely of the short side 201 in the shown embodiment, carrier 3 likewise extends in a longitudinal direction 310 thereof transversely of the direction of navigation 50 of vessel 2.

Referring to figure 6B, another alternative embodiment of the device according to the invention is shown which comprises a vessel 2 in the form of a multicat or pontoon which is provided with a bridge 200 and on which a carrier 3 for a number of receivers 34 is mounted along a long side 202. Because in this embodiment the multicat/pontoon moves in the direction of navigation 50 transversely of the long side 202, carrier 3 likewise extends in a longitudinal direction 310 thereof transversely of the direction of navigation 50 of vessel 2.

The present invention is related to the finding of the inventors that it is possible to obtain more complete and more accurate information about the properties of a bottom, in particular by measuring the geophysical properties of the bottom using the invented support structure which extends transversely of the direction of navigation of a vessel. The measurements provide a more accurate and more complete indication of the possibility of excavating underwater bottoms. The measurements can if desired be used in combination with other and conventional ground data, for instance in order to set dredging parameters at the excavation location. In the case of a cutter suction dredger, parameters which can be set comprise for instance the rotation speed of the cutter head, the tractive force in the winches or any other parameter which is set in order to optimize the efficiency and/or reduce wear. In the case of for instance a trailing suction hopper dredger the visor position, the navigating speed, the suction speed and the like can be set.

One aspect of the invention relates to a method for obtaining information relating to an underwater bottom 56 of an area for dredging. In such a method a support structure 3 attached to vessel 2 and provided with the series of geophysical receivers 34 is immersed under the water surface 27, after which the vessel is set into motion and moved forward in direction 50. Support structure 3 is immersed in water here to a determined distance from underwater bottom 56. The longitudinal direction 310 of support structure 3 extends transversely of the direction of navigation 50 of vessel 2, in any case during forward movement of vessel 2. The geophysical source 33 (or the plurality of sources 33) generates a signal which propagates to the surrounding area, and particularly also in the direction of underwater bottom 56. The signal penetrates into underwater bottom 56 and is affected by the bottom layers. The for instance seismic receivers 34 arranged on support structure 3 measure the response signal from underwater bottom 56, and the information recorded by receivers 34 is transmitted via signal cabling 36 to processing equipment, such as for instance a computer, present on vessel 2. The measurement data are processed and subsequently used to optimize the dredging of an area by a dredging device, such as for instance a dredging crane, cutter suction dredger and/or a trailing suction hopper dredger. The signals obtained from receivers 34 can be transmitted to a data collection unit. The collection unit can for instance comprise a microcomputer with a storage option which converts the signals to digital data, stores and allows other devices to retrieve the data. In typical manner one channel will preferably be present per receiver 34. In the case seismic receivers 34 are applied, the signals can be shown on a seismograph or any other device able to retrieve and store the seismic data from receivers 34. The data are preferably processed with the intention of converting the seismic information to information relating to the distribution of the seismic velocity and relating to the geometry of the bottom. The processing can be performed manually, automatically or with a combination of the two. All characteristics of the seismic signals, in the time domain and/or in the frequency domain, can be used during the processing.

The seismic wave speed comprises a local ground parameter which is related to the geotechnical features of a rock or ground mass, and is preferably measured via a seismic refraction measurement. The seismic velocity represents the propagation velocity of a seismic (or sound) wave in the ground. A higher propagation velocity usually indicates harder rock layers.

In order to further increase the accuracy of the ground information, secondary process-related production parameters can if desired be applied in the analysis. Such parameters comprise for instance vibration data, sound data, temperature measurements at the cutter or drag head, and the speed of forward movement thereof. The data can also be supplemented with geological measurement data obtained by means of methods which are generally known to a skilled person in the field. Examples of such measurement data comprise data obtained from geological maps, geological literature or from drillings at specific locations in the area for dredging.

Seismic sources 33 which generate the signals comprises for instance an airgun, sparker, boomer or other common seismic source. The electromagnetic sources 33 which generate the signals for instance comprise electric coils. Electrical sources 33 which generate the signals can generate a direct voltage or alternating voltage.

The device and method according to the invention can provide a ground image which is made available to the dredge master via a screen using existing visualization software. If desired, a computer of the dredging vessel can itself translate the obtained geological information to optimal dredging parameters on the basis of this information and in fully automatic dredging mode, wherein the final objective is to maximize the performance of the dredging vessel in a so-called self-learning process.

Support structure 3 can be mounted on the stern of vessel 2, for instance on the hull or the deck thereof, or on any other structure of vessel 2. Support structure 3 can be rigidly connected to vessel 2, for instance using bolts or clamps which substantially prevent movement. Support structure 3 can be mounted on the vessel in alternative manner using a movable, preferably pivoting connection (21a, 21b) such as a hinged joint, which allows a limited movement of support structure 3 relative to vessel 2. It will be apparent that the mounting can comprise a damping suspension which reduces vibrations transmitted by vessel 2 to device 1 and likewise buffers vessel 2 against forces exerted on support structure 3 by displacements of vessel 2 through the water. Movements of support structure 3 which affect subsequent calculations can if desired be corrected using a compensation device (not shown) which measures the degree of movement of support structure 3. Support structure 3 is designed such that it can withstand forces exerted during the displacement of vessel 2 through the water, and will as such typically have a lattice structure which provides strength while at the same time being light and having little drag effect. Suitable materials for support structure 3 comprises for instance iron, steel, aluminium and glass and/or carbon fibre-reinforced composite materials.

In an alternative embodiment (not shown) of the invention support structure 3 can comprise a tensioned cable which according to the invention extends transversely of the direction of navigation of vessel 2. The cable is embodied for attachment transversely of the direction of navigation of vessel 2, for instance at the position of the stern thereof. Receivers 34 are attached in a line to the cable. The cable can optionally be provided with a float which is embodied for the purpose of regulating the depth at which the cable comes to lie under the water level during use. According to the invention the cable has bending stiffness and is preferably formed from steel wire with a diameter of at least 5 mm, preferably 6 mm and most preferably 8 mm.

A seismic receiver 34 can comprise a hydrophone, geophone or any other device able to detect and measure displacements or pressure variations in relation to the seismic signal, although hydrophones 34 are preferably applied.

An electromagnetic receiver 34 can comprise a magnetometer or any other device able to detect and measure variations in relation to the magnetic field, although magnetometers 34 are preferably applied.

Electric receiver 34 can comprise a potentiometer or any other device able to detect and measure variations in relation to an electric voltage or current, although potentiometers 34 are preferably applied.

Receivers 34 can be arranged in a straight line as shown in figure 3, but can alternatively be arranged offset relative to a straight line. They can thus be arranged for instance in any one-, two- or three-dimensional pattern.

Support structure 3 is preferably provided with one or more depth gauges, preferably a pressure gauge. Support structure 3 can if desired also be provided with propelling means to enable its position and orientation to be determined at a distance from, and to a certain extent independently of, the position of vessel 2. The propelling means for instance comprise one or more motorized propellers (not shown). The remote control can be achieved using cables or a wireless connection. The position of support structure 3 can be precisely determined, for instance using local triangulation, for instance by detection of a marker on support structure 3 by for instance two cameras situated on vessel 2, or using a worldwide satellite navigation device, for instance GPS.

Receivers 34 preferably directed in a downward facing position in order to detect signals coming from underwater bottom 56. Depending on the form of support structure 3, they will typically form a line or plane running parallel to the horizon. Other setups lie however within the scope of the invention. It is thus possible for one or more receivers to lie above or below the line or the plane. The line or the plane can also run at an incline relative to the horizon, for instance at an angle of 1, 5, 10, 15, 20, 25, 30, 35, 40 degrees, preferably between 0 and 10 degrees.

The number of receivers 34 can be chosen within broad limits and will generally depend on the resolution required and on the area that has to be measured. The number of receivers will typically lie between 3 and 30, preferably between 5 and 15.

When seismic refraction measurements are performed the device 1 can be embodied such that the minimum horizontal distance between source 33 and receivers 34 is greater than or equal to 5 m, 7 m, 9 m, 11 m, 13 m, 15 m, or a value in a range between any two of said values. The skilled person in the field will appreciate that the more receivers 34 are present and the greater the horizontal distance they span, the better the underwater bottom 56 can be covered.

The invention is not limited to the use of seismic velocity or geoelectrical resistivity, or possible other parameters or a combination of parameters as may be warranted for a determined dredging project.

## Claims

1. Device for obtaining information about the ground of an area for dredging, comprising a vessel (2), a source (33) embodied to generate a geophysical signal under water, and an elongate carrier (3), mounted to the vessel (2) for carrying a series of receivers (34) which are embodied to measure a response signal returning via the bottom (56), wherein the carrier extends in a longitudinal direction (310) transversely of the direction of navigation (26) of the vessel (2), **characterized in that** the carrier (3) comprises an elongate support structure (3) comprising a lattice of mutually connected lattice elements (31, 32) to provide bending stiffness to the carrier (3), and **in that** the support structure (3) is immersible in water, wherein the lattice elements are provided with openings accessible to water.

2. Device as claimed in any of the foregoing claims, wherein the receivers lie in a line extending parallel to the longitudinal direction of the carrier.

3. Device as claimed in any of the foregoing claims, wherein each receiver is located a fixed distance from the source.

4. Device as claimed in any of the foregoing claims, wherein the carrier is provided with a depth gauge (40), preferably a pressure gauge.

5. Device as claimed in any of the foregoing claims, wherein the carrier is provided with damping means (70, 71) embodied to reduce the disturbance of the signal generated by the source through the carrier.

6. Device as claimed in claim 5, wherein the source generates a seismic signal and the damping means are embodied such that the propagation velocity of the wave generated by the source through the carrier is lower than the propagation velocity of the wave generated by the source through the underwater bottom.

7. Device as claimed in claim 5, wherein the source generates an electromagnetic signal and the damping means are embodied such that the electromagnetic field generated by the source is not disturbed by the carrier, or minimally so.

8. Device as claimed in any of the claims 5-7, wherein the damping means comprise rubber elements.

9. Device as claimed in any of the claims 5-8, wherein the damping means are placed between the carrier and receivers mounted on the carrier.

10. Device as claimed in any of the foregoing claims, wherein the source and/or the receivers and/or signal cabling (36) therefor is accommodated in the carrier.

11. Device as claimed in any of the foregoing claims, wherein the source and/or the receivers and/or signal cabling (36) is mounted in rigid manner on the underside of the carrier.

12. Device as claimed in any of the foregoing claims, wherein the source comprises a seismic source and the receivers comprise seismic receivers.

13. Device as claimed in any of the foregoing claims, wherein the source comprises an electromagnetic source and the receivers comprise electromagnetic receivers.

14. Device as claimed in any of the foregoing claims, wherein the source comprises an electrical source and the receivers comprise electrical receivers.

15. Method for obtaining information about the ground of an area for dredging, wherein a device as claimed in any of the foregoing claims is provided, the carrier (3) mounted on the vessel and provided with the series of receivers is immersed in water, the vessel is moved forward, wherein the longitudinal direction of the carrier extends transversely of the direction of navigation of the vessel, the source generates signals and the receivers measure response signals returning via the underwater bottom.

## Patentansprüche

1. Vorrichtung zur Gewinnung von Informationen über den Boden eines Gebietes für Baggerarbeiten, umfassend ein Schiff (2), eine Quelle (33), die dazu ausgebildet ist, ein geophysikalisches Signal unter Wasser zu erzeugen, und einen länglichen Träger (3), der auf dem Schiff (2) angebracht ist, um eine Reihe von Empfängern (34) zu tragen, die dazu ausgebildet sind, ein über den Boden (56) zurückkommendes Antwortsignal zu messen, wobei sich der Träger in einer Längsrichtung (310) quer zur Navigationsrichtung (26) des Schiffs (2) erstreckt,
**dadurch gekennzeichnet, dass**
der Träger (3) eine längliche Stützstruktur (3) aufweist, die ein Gitter aus miteinander verbundenen Gitterelementen (31, 32) aufweist, um dem Träger (3) Biegesteifigkeit zu verleihen, und dass die Stützstruktur (3) in Wasser eintauchbar ist, wobei die Gitterelemente mit Öffnungen ausgebildet sind, die für Wasser zugänglich sind.

2. Die Vorrichtung nach einem der vorhergehenden Ansprüche, wobei die Empfänger in einer Linie liegen, die parallel zur Längsrichtung des Trägers verläuft.

3. Die Vorrichtung nach einem der vorhergehenden Ansprüche, wobei jeder Empfänger in einem festen Abstand von der Quelle angeordnet ist.

4. Die Vorrichtung nach einem der vorhergehenden Ansprüche, wobei der Träger ein Tiefenmessgerät (40), vorzugsweise ein Druckmessgerät, aufweist.

5. Die Vorrichtung nach einem der vorhergehenden Ansprüche, wobei der Träger Dämpfungsmitteln (70, 71) aufweist, die ausgebildet sind, um die Störung des von der Quelle erzeugten Signals durch den Träger zu reduzieren.

6. Die Vorrichtung nach Anspruch 5, wobei die Quelle ein seismisches Signal erzeugt und die Dämpfungsmittel so ausgebildet sind, dass die Ausbreitungsgeschwindigkeit der von der Quelle erzeugten Welle durch den Träger geringer ist als die Ausbreitungsgeschwindigkeit der von der Quelle erzeugten Welle durch den Unterwasserboden.

7. Die Vorrichtung nach Anspruch 5, wobei die Quelle ein elektromagnetisches Signal erzeugt und die Dämpfungsmittel so ausgebildet sind, dass das von der Quelle erzeugte elektromagnetische Feld nicht oder nur minimal durch den Träger gestört wird.

8. Die Vorrichtung nach einem der Ansprüche 5 bis 7, wobei die Dämpfungsmittel Gummielemente aufweisen.

9. Die Vorrichtung nach einem der Ansprüche 5 bis 8, wobei die Dämpfungsmittel zwischen dem Träger und den auf dem Träger montierten Empfängern angeordnet sind.

10. Die Vorrichtung nach einem der vorhergehenden Ansprüche, wobei die Quelle und/oder die Empfänger und/oder die Signalverkabelung (36) dafür in dem Träger angeordnet sind.

11. Die Vorrichtung nach einem der vorhergehenden Ansprüche, wobei die Quelle und/oder die Empfänger und/oder die Signalverkabelung (36) dafür starr an der Unterseite des Trägers angebracht sind.

12. Die Vorrichtung nach einem der vorhergehenden Ansprüche, wobei die Quelle eine seismische Quelle aufweist und die Empfänger seismische Empfänger aufweisen.

13. Die Vorrichtung nach einem der vorhergehenden Ansprüche, wobei die Quelle eine elektromagnetische Quelle aufweist und die Empfänger elektromagnetische Empfänger aufweisen.

14. Die Vorrichtung nach einem der vorhergehenden Ansprüche, wobei die Quelle eine elektrische Quelle aufweist und die Empfänger elektrische Empfänger aufweisen.

15. Ein Verfahren zur Gewinnung von Informationen über den Boden eines Gebietes für Baggerarbeiten, wobei eine Vorrichtung gemäß einem der vorhergehenden Ansprüche vorgesehen ist, der Träger (3), der auf dem Schiff montiert ist und mit der Reihe von Empfängern versehen ist, in Wasser eingetaucht wird,
das Schiff vorwärts bewegt wird, wobei die Längsrichtung des Trägers quer zur Fahrtrichtung des Schiffes verläuft, die Quelle Signale erzeugt und
die Empfänger Antwortsignale messen, die über den Unterwasserboden zurücklaufen.

## Revendications

1. Dispositif d'obtention d'informations concernant le sol d'une zone à draguer, comprenant un navire (2), une source (33) mise en oeuvre afin de produire un signal géophysique sous l'eau et un support allongé (3), monté sur le navire (2) de manière à supporter une série de récepteurs (34) qui sont mis en oeuvre afin de mesurer un signal de réponse renvoyé par le fond (56), dans lequel le support s'étend dans une direction longitudinale (310) transversalement par rapport à la direction de navigation (26) du navire (2), **caractérisé en ce que** le support (3) comprend une structure de support allongée (3) comprenant un treillis d'éléments en treillis (31, 32) reliés mutuellement afin d'assurer une certaine rigidité en flexion au support (3), et **en ce que** la structure de support (3) peut être immergée dans l'eau, dans lequel les éléments en treillis comportent des ouvertures accessibles à l'eau.

2. Dispositif selon l'une quelconque des revendications précédentes, dans lequel les récepteurs se situent sur une ligne s'étendant parallèlement à la direction longitudinale du support.

3. Dispositif selon l'une quelconque des revendications précédentes, dans lequel chaque récepteur est situé à une distance fixe de la source.

4. Dispositif selon l'une quelconque des revendications précédentes, dans lequel le support est équipé d'une jauge de profondeur (40), de préférence, d'une jauge de pression.

5. Dispositif selon l'une quelconque des revendications précédentes, dans lequel le support comporte des moyens d'amortissement (70, 71) mis en oeuvre afin de réduire la perturbation du signal produit par la source à travers le support.

6. Dispositif selon la revendication 5, dans lequel la source produit un signal séismique et les moyens d'amortissement sont mis en oeuvre de telle sorte que la vitesse de propagation de l'onde produite par la source à travers le support est inférieure à la vitesse de propagation de l'onde produite par la source à travers le fond subaquatique.

7. Dispositif selon la revendication 5, dans lequel la source produit un signal électromagnétique et les moyens d'amortissement sont mis en oeuvre de telle sorte que le champ électromagnétique produit par la source ne soit pas troublé par le support, ou de manière minimule.

8. Dispositif selon l'une quelconque des revendications 5 à 7, dans lequel les moyens d'amortissement comprennent des éléments en caoutchouc.

9. Dispositif selon l'une quelconque des revendications 5 à 8, dans lequel les moyens d'amortissement sont placés entre le support et les récepteurs montés sur le support.

10. Dispositif selon l'une quelconque des revendications précédentes, dans lequel la source et/ou les récepteurs et/ou le câblage de signal (36) associé sont agencés sur le support.

11. Dispositif selon l'une quelconque des revendications précédentes, dans lequel la source et/ou les récepteurs et/ou le câblage de signal (36) sont montés de manière rigide sur la face inférieure du support.

12. Dispositif selon l'une quelconque des revendications précédentes, dans lequel la source comprend une source séismique et les récepteurs comprennent des récepteurs séismiques.

13. Dispositif selon l'une quelconque des revendications précédentes, dans lequel la source comprend une source électromagnétique et les récepteurs comprennent des récepteurs électromagnétiques.

14. Dispositif selon l'une quelconque des revendications précédentes, dans lequel la source comprend une source électrique et les récepteurs comprennent des récepteurs électriques.

15. Procédé d'obtention d'informations concernant le sol d'une zone à draguer,
dans lequel un dispositif selon l'une quelconque des revendications précédentes est mis en oeuvre, le support (3) monté sur le navire et comportant la série de récepteurs est immergé dans l'eau, le navire est déplacé vers l'avant, dans lequel la direction longitudinale du support s'étend transversalement par rapport à la direction de navigation du navire, la source produit des signaux et les récepteurs mesurent des signaux de réponse renvoyés par l'intermédiaire du fond subaquatique.
